# EUROPEAN PATENT APPLICATION

(11) **EP 2 821 902 A1**
(43) Date of publication of application: **07.01.2015**
(21) Application number: 12874082.6
(22) Date of filing: 16.07.2012
(51) Int. Cl.: G06F 3/048

(54) **DISPLAY AREA CONTROL METHOD, SYSTEM AND MOBILE TERMINAL**

(30) Priority: 13.04.2012 CN 201210107693
(71) Applicant: ZTE Corporation, Guangdong Province 518057 (CN)
(72) Inventor: WANG, Chong, Shenzhen Guangdong 518057 (CN); YANG, Caiyan, Shenzhen Guangdong 518057 (CN)
(74) Representative: Zerbi, Guido Maria
(86) International application number: PCT/CN2012/078671
(87) International publication number: WO 2013/152567

(57) **Abstract**

A display area control method, system and a mobile terminal are disclosed, the method includes: receiving a request for adjusting a display area; acquiring a target shape of the display area to which is required to be adjusted; and controlling contents to be displayed for displaying within a display area of the target shape. The system includes a request receiving module, an acquisition module and a control module, the request receiving module is configured to: receive a request for adjusting a display area; the acquisition module is configured to: acquire a target shape of the display area to which is required to be adjusted; and the control module is configured to: control contents to be displayed for displaying within the display area of the target shape. The mobile terminal includes the above display area control system. With the above technical scheme, the problem that a shape adjustment cannot be implemented since display areas of various electronic devices are fixed is solved.

## Description

### Technical Field

The present document relates to the field of electronics, and particularly, to a display area control method, system and a mobile terminal.

### Background of the Related Art

Display screens on various electronic devices are generally in a shape of rectangle, thus display areas of the display screens are all fixed as rectangles, and all the displayed contents are typeset according to the shape of rectangle. However, considering from the perspective of diversity and personalization of user demands, such display effects seem comparatively simplex and not humanized enough, the degree of user experience is not strong, and the enjoyment is not enough.

### Summary of the Invention

The present document provides a display area control method, system and a mobile terminal, to solve the problem that a shape adjustment cannot be implemented since display areas of various electronic devices are fixed in the related art.

In order to solve the above technical problem, the following technical scheme is adopted in the present document.

A display area control method comprises: receiving a request for adjusting a display area; acquiring a target shape of the display area to which is required to be adjusted; and controlling contents to be displayed for displaying within a display area of the target shape.

Preferably, controlling contents to be displayed for displaying within the display area of the target shape is: meeting a principle that images and texts are not deformed and only change of display positions is carried out, and performing self-adaptive display.

Preferably, ways of acquiring the target shape of the display area to which is required to be adjusted include: a predefinition acquisition way, a network download acquisition way and/or an external input acquisition way; the predefinition acquisition way is selecting a corresponding target shape from multiple predefined templates or a local gallery according to a received selection instruction; the network download acquisition way is downloading a target shape from the network according to a received download instruction; and the external input acquisition way is receiving external input information, and extracting a target shape from the external input information.

Preferably, the request for adjusting carries acquisition ways of the target shape, the acquisition ways of the target shape include the predefinition acquisition way, the network download acquisition way and/or the external input acquisition way; and acquiring the target shape of the display area to which is required to be adjusted, is: acquiring the target shape of the display area to which is required to be adjusted according to the acquisition ways of the target shape carried in the request for adjusting.

Preferably, the external input information includes information input through a keyboard input mode, a handwriting mode and/or a camera device.

Preferably, extracting the target shape from the external input information comprises: saving the external input information in a form of images, identifying image contents and extracting an exterior contour of the image contents.

Preferably, while controlling the contents to be displayed for displaying within the display area of the target shape, pixels outside the display area of the target shape on a display screen are controlled to be closed.

A display area control system comprises: a request receiving module, an acquisition module and a control module, wherein: the request receiving module is configured to: receive a request for adjusting a display area; the acquisition module is configured to: acquire a target shape of the display area to which is required to be adjusted; and the control module is configured to: control contents to be displayed for displaying within the display area of the target shape.

Preferably, the acquisition module comprises: a predefinition acquisition module, a network download acquisition module and/or an external input acquisition module, wherein, the predefinition acquisition module is configured to: select a corresponding target shape from multiple predefined templates or a local gallery according to a received selection instruction; the network download acquisition module is configured to: download a target shape from the network according to a received download instruction; and the external input acquisition module is configured to: receive external input information, and extract a target shape from the external input information.

Preferably, the request receiving module is further configured to: parse out acquisition ways of the target shape from the request for adjusting, wherein the acquisition ways of the target shape include a predefinition acquisition way, a network download acquisition way and/or an external input acquisition way; and start a corresponding one of the predefinition acquisition module, the network download acquisition module and the external input acquisition module according to the parsed-out acquisition way of the target shape.

Preferably, the control module is further configured to: while controlling the contents to be displayed for displaying within the display area of the target shape, control to close pixels outside the display area of the target shape on a display screen.

A mobile terminal comprising the above display area control system.

The beneficial effects of the example of the present document include: after receiving the request for adjusting the display area, starting a display area adjustment function, and controlling the contents to be displayed for displaying within the display area of the target shape, thereby achieving the object of adaptively adjusting a shape of the display area according to the user requirements, promoting the degree of user experience, enhancing the enjoyment, and possessing the humanization.

### Brief Description of Drawings

FIG. 1 is a schematic diagram of a display area control system according to the example of the present document.
FIG. 2 is a flow diagram of the system shown in FIG. 1 performing display area control according to the example of the present document.
FIG. 3 is a schematic diagram of a display area control system provided by one example of the present document.
FIG. 4 is a flow diagram of the system shown in FIG. 3 performing display area control according to the example of the present document.

### Preferred Embodiments of the Invention

The present document will be further described in detail in combination with the accompanying drawings through the specific embodiments below.

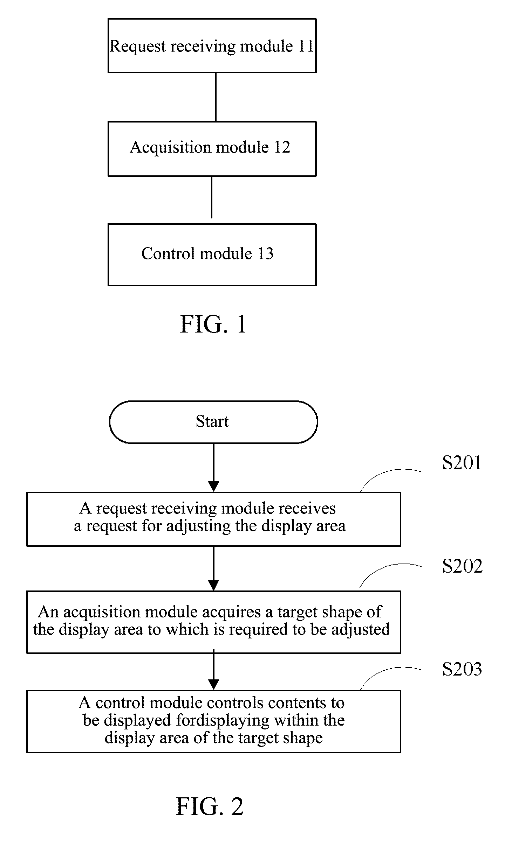

A main inventive conception of the example of the present document is starting a display area adjustment function according to a request for adjusting a display area sent by the user, and according to a target shape of the display area to which is required by the user to be adjusted, controlling contents to be displayed for displaying within the display area of the target shape. FIG. 1 shows a display area control system of the present document, which includes a request receiving module 11, an acquisition module 12 and a control module 13. FIG. 2 is a method for the system shown in FIG. 1 performing display area control, and the following steps are included.

In step S201, the request receiving module 11 receives a request for adjusting the display area.

In step S202, the acquisition module 12 acquires a target shape of the display area to which is required to be adjusted.

In step S203, the control module 13 controls contents to be displayed for displaying within the display area of the target shape.

The request receiving module 11, the acquisition module 12 and the control module 13 collaborate with each other, thus achieving the object of adaptively adjusting a shape of the display area according to the user requirements.

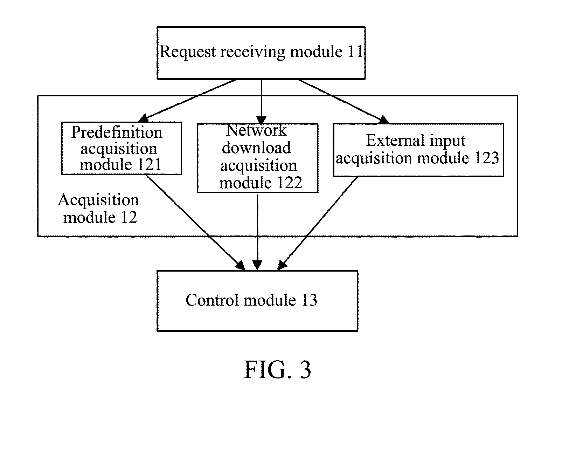

FIG. 3 shows a display area control system provided by one example of the present document, various acquisition ways for the target shape of the display area are provided in the example, which include a predefinition acquisition way, a network download acquisition way and an external input acquisition way. Wherein, the acquisition module 12 includes a predefinition acquisition module 121, a network download acquisition module 122 and an external input acquisition module 123. The predefinition acquisition module 121 needs to predefine various shapes as templates or link to a local gallery, provides a selection interface for the user, receives a selection instruction from the user, for the user to select a target shape from the templates or the local gallery, and transfers the target shape, or local position information of the target shape and identification information, etc. to the control module 13. The network download acquisition module 122 is linked to the network, provides a download interface for the user, downloads a target shape from the network according to a download instruction received from the user, and transfers the target shape, or the locally saved position information of the target shape and identification information, etc. to the control module 13. The external input acquisition module 123 is used to receive external input information input by the user in ways of keyboard, handwriting and camera devices and so on, such as texts and symbols input through the keyboard, texts, symbols and graphics input by the way of handwriting, and images shot by the camera devices, then save the received information in a form of images, identify the image contents and extract an exterior contour of the image contents as a target shape, and transfer the target shape, or the locally saved position information of the target shape and identification information, etc. to the control module 13. There are various ways of extracting the target shape of the display area according to the external input information, which is not limited to the ways illustrated above.

In the example, a request for adjusting sent by the user is not only used for starting the display area adjustment function, but the request for adjusting also includes an acquisition way of the target shape of the display area expected by the user. The request receiving module 11 is also used for parsing out an acquisition way of the target shape from the request for adjusting after receiving the request for adjusting, and starting a corresponding one of the predefinition acquisition module 121, the network download acquisition module 122 and the external input acquisition module 123 according to the parsed-out acquisition way of the target shape. For example, if the parsed-out acquisition way of the target shape is the predefinition acquisition way, the predefinition acquisition module 121 is started. The control module 13 controls the contents to be displayed for displaying within the display area of the target shape according to the target shape acquired by the predefinition acquisition module 121, the network download acquisition module 122 or the external input acquisition module 123.

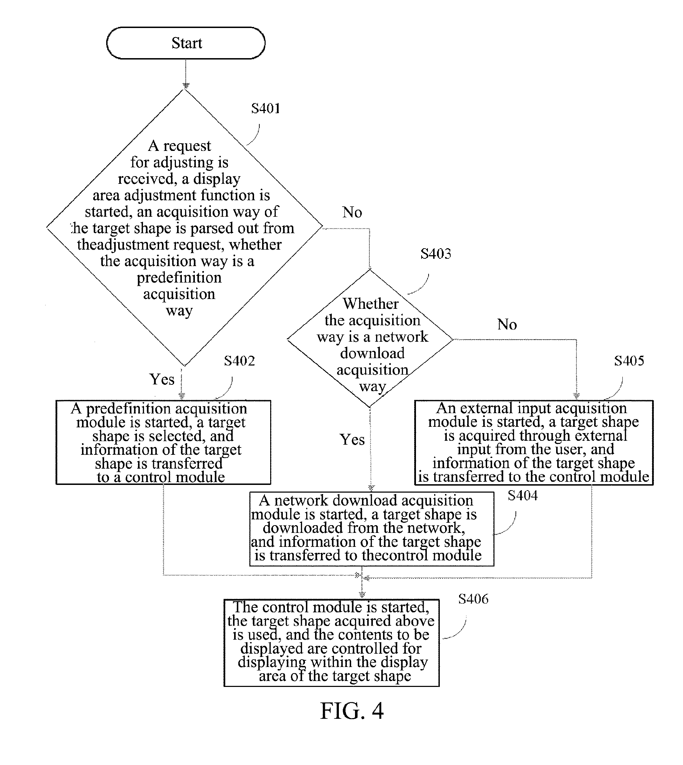

As shown in FIG. 4, it is a method for the system shown in FIG. 3 performing display area control, which includes the following steps.

In step S401, a request receiving module 11 receives a request for adjusting, starts a display area adjustment function, parses out an acquisition way of the target shape from the request for adjusting, if the acquisition way is a predefinition acquisition way, it is to proceed to step S402, and if the acquisition way is not the predefinition acquisition way, it is to proceed to step S403.

In step S402, a predefinition acquisition module 121 is started, the predefinition acquisition module 121 receives a selection instruction from the user, provides a selection interface to the user, for the user to select a target shape from templates or a local gallery, and transfers the target shape, or local position information of the target shape and identification information, etc. to a control module 13.

In step S403, if the acquisition way is a network download acquisition way, it is to proceed to step S404, and if the acquisition way is not the network download acquisition way, it is to proceed to step S405.

In step S404, a network download acquisition module 122 is started, the network download acquisition module 122 is linked to the network, provides a download interface for the user, downloads a target shape from the network according to a download instruction received from the user, and transfers the target shape, or the locally saved position information of the target shape and identification information, etc. to the control module 13.

In step S405, an external input acquisition module 123 is started, for example, texts and symbols input by the user through the keyboard, texts, symbols and graphics input by the way of handwriting, and images shot by the camera devices are received, then the received information is saved in a form of images, the image contents are identified and an exterior contour of the image contents is extracted as a target shape, and the target shape or the locally saved position information of the target shape and identification information, etc. are transferred to the control module 13.

In step S406, the control module 13 is started, the target shape acquired in the step S402, step S404 or step S405 is used, the contents to be displayed are controlled to be within the display area of the target shape, a preview image is generated, and display is performed after the user makes a confirmation.

In another example of the present document, the control module 13 controls the contents to be displayed for adaptively displaying within the display area of the target shape, the ways of adaptively displaying include but are not limited to what is illustrated below: meeting a principle that the images and texts are not deformed and only change of display positions is carried out.

In another example of the present document, while the control module 13 controls the contents to be displayed for displaying within the display area of the target shape, it also controls to close pixels outside the display area of the target shape on the display screen, so as to achieve the object of power saving.

The present document also comprises a mobile terminal including the above display area control system. The above display area control system and display area control method are applicable to the mobile terminal, which can control the display area of the display screen of the mobile terminal, and adaptively adjust the shape of the display area according to the user requirements.

The above contents are further detailed descriptions of the present document made in combination with the specific embodiments, it shall not be affirmed that the specific embodiments of the present document are only limited to these descriptions. For those ordinary skilled in the art to which the present document belongs, simple deductions or substitutions also can be made without departing from the conception of the present document, and all these simple deductions or substitutions should fall into the protection scope of the present document.

### Industrial Applicability

In the example of the present document, it can select the target shape of the display area from the multiple predefined templates or the local gallery, or download the target shape of the display area from the network, or input the target shape of the display area by the way of keyboard, handwriting and camera devices, which not only enriches the acquisition ways of the target shape of the display area, but also makes shapes of the display areas possess the diversity, such as a head portrait shape, a flower shape, a circle shape and a square shape, thereby prompting the degree of user experience, enhancing the enjoyment, and realizing more humanizations.

In the example of the present document, while controlling the contents to be displayed for displaying within the display area of the target shape, pixels outside the display area of the target shape on the display screen are controlled to be closed. Compared with common power-saving methods in the related art, such as closing applications (e.g., Global Position System (GPS) and radio frequency reception, etc.) that will not be used any more in the background and lowering the luminance of the display screen and so on, with the method, it does not exert any influence on the usage of functions, and the object of power saving is achieved at the same time.

## Claims

1. A display area control method, comprising:
receiving a request for adjusting a display area;
acquiring a target shape of the display area to which is required to be adjusted; and
controlling contents to be displayed for displaying within a display area of the target shape.

2. The display area control method according to claim 1, wherein, controlling contents to be displayed for displaying within the display area of the target shape is: meeting a principle that images and texts are not deformed and only change of display positions is carried out, and performing adaptive display.

3. The display area control method according to claim 1, wherein, ways of acquiring the target shape of the display area to which is required to be adjusted include: a predefinition acquisition way, a network download acquisition way and/or an external input acquisition way; the predefinition acquisition way is selecting a corresponding target shape from multiple predefined templates or a local gallery according to a received selection instruction; the network download acquisition way is downloading a target shape from a network according to a received download instruction; and the external input acquisition way is receiving external input information, and extracting a target shape from the external input information.

4. The display area control method according to claim 3, wherein, the request for adjusting carries acquisition ways of the target shape, the acquisition ways of the target shape include the predefinition acquisition way, the network download acquisition way and/or the external input acquisition way; and acquiring a target shape of the display area to which is required to be adjusted is: acquiring the target shape of the display area to which is required to be adjusted according to the acquisition ways of the target shape carried in the request for adjusting.

5. The display area control method according to claim 3, wherein, the external input information includes information input through a keyboard input mode, a handwriting mode and/or a camera device.

6. The display area control method according to claim 3, wherein, extracting the target shape from the external input information comprises: saving the external input information in a form of images, identifying image contents and extracting an exterior contour of the image contents.

7. The display area control method according to any one of claims 1 to 6, wherein, while controlling the contents to be displayed for displaying within the display area of the target shape, pixels outside the display area of the target shape on a display screen are controlled to be closed.

8. A display area control system, comprising: a request receiving module, an acquisition module and a control module, wherein:
the request receiving module is configured to: receive a request for adjusting a display area;
the acquisition module is configured to: acquire a target shape of the display area to which is required to be adjusted; and
the control module is configured to: control contents to be displayed for displaying within the display area of the target shape.

9. The display area control system according to claim 8, wherein, the acquisition module comprises: a predefinition acquisition module, a network download acquisition module and/or an external input acquisition module, wherein,
the predefinition acquisition module is configured to: select a corresponding target shape from multiple predefined templates or a local gallery according to a received selection instruction;
the network download acquisition module is configured to: download a target shape from a network according to a received download instruction; and
the external input acquisition module is configured to: receive external input information, and extract a target shape from the external input information.

10. The display area control system according to claim 9, wherein, the request receiving module is further configured to: parse out acquisition ways of the target shape from the request for adjusting, wherein the acquisition ways of the target shape include a predefinition acquisition way, a network download acquisition way and/or an external input acquisition way; and start a corresponding one of the predefinition acquisition module, the network download acquisition module and the external input acquisition module according to the parsed-out acquisition way of the target shape.

11. The display area control system according to any one of claims 8 to 10, wherein, the control module is further configured to: while controlling the contents to be displayed for displaying within the display area of the target shape, control to close pixels outside the display area of the target shape on a display screen.

12. A mobile terminal comprising the display area control system according to any one of claims 8 to 10.
